# EUROPÄISCHE PATENTSCHRIFT

(11) **EP 1 813 091 B1**
(45) Veröffentlichungstag und Bekanntmachung des Hinweises auf die Patenterteilung: **27.05.2015**
(21) Anmeldenummer: 05786851.5
(22) Anmeldetag: 20.09.2005
(51) Int. Cl.: H04M 3/51

(54) **ANRUFVERTEILUNG IN EINEM DIREKTKOMMUNIZIERENDEN NETZWERK**
CALL DISTRIBUTION IN A DIRECT COMMUNICATION NETWORK
DISTRIBUTION D'APPELS DANS UN RESEAU DE COMMUNICATION DIRECTE

(30) Priorität: 17.11.2004 DE 102004055494
(43) Veröffentlichungstag der Anmeldung: 01.08.2007
(73) Patentinhaber: Unify GmbH & Co. KG, 81379 München (DE)
(72) Erfinder: NEUHAUS, Ralf, 44534 Lünen (DE)
(74) Vertreter: Fritzsche, Thomas
(86) Internationale Anmeldenummer: PCT/EP2005/054703
(87) Internationale Veröffentlichungsnummer: WO 2006/053798

(56) Entgegenhaltungen:
- EP-A- 1 237 347
- US-A- 5 530 744
- SINGH K ET AL: "Peer-to-Peer Internet Telephony using SIP" X, 31. Oktober 2004 (2004-10-31), XP002336408

## Beschreibung

Die Erfindung betrifft ein Verfahren zur Weiterleitung eines Rufes gemäß dem Oberbegriff des Patentanspruchs 1, und eine Kommunikationskomponente für ein direkt kommunizierendes Kommunikationsnetzwerk gemäß dem Oberbegriff des Patentanspruchs 9.

In Kommunikationsanordnungen werden eingehende Rufe, die nicht direkt den richtigen Empfänger erreichen, an den richtigen Empfänger weitergeleitet. Das ist insbesondere dann der Fall, wenn einem Anrufer der "richtige" Ansprechpartner, beispielsweise in einer größeren Firma, nicht bekannt ist. Ein solcher eingehender Ruf kann dann automatisch an eine Person bzw. deren Kommunikationsendgerät weitergeleitet werden. Solche technischen Einrichtungen zur automatischen Verteilung von eingehenden Kommunikationsverbindungen (Rufe) werden oft auch als ACD-Systeme (ACD engl. = Automatic Call Distribution) bezeichnet und werden für sog. Call-Center ("Hotlines") eingesetzt.

Die ACD-Systeme bestehen entweder aus einem speziellen Zusatzprogramm, welches Bestandteil einer privaten Vermittlungseinrichtung (Kommunikationsanlage, Kommunikationsknoten) ist, oder aber aus einem externen Gerät (Server), welches an eine Kommunikationsanlage angeschlossen ist und der Kommunikationsanlage für einen eingehenden Ruf das jeweilige Vermittlungsziel (Person bzw. deren Kommunikationsendgerät) vorschreibt. Zur Auswahl des Vermittlungszieles werden dabei häufig auch Informationen über Eigenschaften des eingehenden Rufs (sog. Rufeigenschaften) ausgewertet. Beispielsweise können den Mitarbeitern eines Call-Centers verschiedene geographische Gebiete zugeordnet sein; die Zuordnung des geographischen Gebietes zu einem Mitarbeiter ist dabei eine Eigenschaftsinformation. Wenn bei einem eingehenden Ruf die Rufnummer des Anrufers übertragen wird (Clip-Funktion), kann das ACD-System anhand der Vorwahlnummer die Herkunft des Rufes bestimmen und durch einen Vergleich mit gespeicherten Eigenschaftsinformationen den entsprechend zugeordneten Mitarbeiter und damit dessen Kommunikationsendgerät als Rufweiterleitungs-Ziel bestimmen. Alternativ kann das ACD-System einen eingehenden Ruf auch automatisiert annehmen und durch eine sprachgesteuerte Abfrage, die der Anrufer beispielsweise per MSV-Tastenwahl beantwortet, so weit kategorisieren, also Rufeigenschaften ermitteln, bis der richtige Ansprechpartner bzw. eine Gruppe richtiger Ansprechpartner bestimmbar ist.

Aus der Druckschrift EP 1 237 347 A2 (Coussement: "Distributed hardware/software system for managing agent status in a communication center") ist ein solches ACD-System in einem leitungsvermittelten Kommunikationsnetzwerk bekannt. Eine zentrale Einrichtung, die sog. "Agent Presence Application", überwacht die Ressourcen von Mitarbeitern (Agenten) und übermittelt dabei gewonnene Zustandsinformationen an daran angeschlossene weitere Anwendungen in dem Kommunikationsnetzwerk.

Besonders im Zuge des vermehrten Einsatzes von paketvermittelten Kommunikationsnetzwerken (VoIP-Netze; VoIP = Voiceover-Internet-Protocol) werden vermehrt direkt kommunizierende Kommunikationsnetzwerke eingesetzt. Diese auch als Peer-to-Peer-Netzwerke ("P2P-Networks") bekannten Kommunikationsanordnungen haben die Besonderheit, dass sie ohne eine zentrale Vermittlungsinstanz (Kommunikationsanlage, Gatekeeper, o.ä.) funktionieren. Die Peer-to-Peer-Netzwerke sind in erster Linie als sog. File-Sharing-Netzwerke zum Austausch von Dateien (zumeist Musikdateien oder digitalisierte Spielfilme) bekannt geworden, werden aber auch zunehmend für die direkte Sprachkommunikation (Telephonie, Video-Telephonie, Chat etc.) eingesetzt. In diesen Peer-to-Peer-Netzwerken lässt sich kein ACD-System in eine Vermittlungsinstanz (Kommunikationsanlage, Gatekeeper) integrieren, weil entweder keine zentrale Vermittlungsinstanz existiert, oder aber eine (optional nutzbare) zentrale Vermittlungsinstanz nicht zwangsläufig für den Aufbau einer Kommunikationsverbindung bzw. die Weiterleitung eines eingehenden Rufes verwendet wird. Zwar ist es möglich, eine Kommunikationskomponente - man spricht bei den Peer-to-Peer-Netzwerken auch von "Clients" - als zentralen Ansprechpartner, also als Rufziel, für eingehende Rufe zu benennen und diesen mit einer ACD-Funktion zu versehen. Dies widerspricht jedoch dem Peer-to-Peer-Gedanken, weil durch die Schaffung und durch die zwangsweise Nutzung einer solchen zentralen Instanz die den Peer-to-Peer-Netzwerken eigene Flexibilität und das Selbstorganisationsvermögen verloren geht. Außerdem ist somit die den Peer-to-Peer-Netzwerken eigene Redundanz nicht mehr gegeben, denn bei einem Ausfall dieser zentralen Instanz ist die ACD-Funktion solange nicht mehr gegeben, bis eine andere Instanz als zentrales Rufziel administriert wird und in dieser eine ACD-Funktion eingerichtet wird.

Es ist also eine Aufgabe der vorliegenden Erfindung, die Weiterleitung von eingehenden Rufen in direkt kommunizierenden Kommunikationsnetzwerken zu verbessern und den Administrationsaufwand für direkt kommunizierende Kommunikationsnetzwerke zu verringern sowie Arbeitsgruppe dynamisch zu gestalten.

Die Aufgabe wird für das Verfahren durch die Merkmale des unabhängigen Patentanspruchs 1 und für die Kommunikationskomponente durch die Merkmale des unabhängigen Patentanspruchs 9 gelöst.

Die Lösung sieht ein verfahren zur Weiterleitung eines bei einem ersten Client eingehenden Rufes an einen zweiten einer Mehrzahl weiterer Clients in einem direkt kommunizierenden Kommunikationsnetzwerk vor, bei dem der zweite Client aus der Mehrzahl weiterer Clients ausgewählt wird, die Auswahl durch den ersten Client erfolgt, die Auswahl anhand von den weiteren Clients jeweils zugeordneten und im ersten Client verfügbaren Eigenschaftsinformationen erfolgt, und bei dem der Ruf an den ausgewählten der weiteren Clients weitergeleitet wird. Zum Abruf der Eigenschaftsinformationen wird eine Abfragenachricht mit zumindest einem Suchbegriff von dem ersten Client zu zumindest einem der weiteren Clients versendet. Das Ziel für die Weiterleitung eines eingehenden Rufes kann präziser bestimmt werden, indem zur Auswahl zumindest eine dem eingehenden Ruf zugeordnete Rufnummer ausgewertet wird, wobei der Suchbegriff mit den Eigenschaftsinformationen in Beziehung gesetzt wird.

Das erfindungsgemäße Verfahren zeichnet sich dadurch aus, dass der Suchbegriff die Rufnummer einer Arbeitsgruppe ist, die Abfragenachricht als Broadcast- oder Multicastmeldung versendet wird und die Eigenschaftsinformationen Informationen darüber enthalten, ob der jeweilige Client derzeit Teil der Arbeitsgruppe ist.

Bei diesem Verfahren ist von Vorteil, dass die Funktion eines ACD-Systems durch die "gleichberechtigten" Komponenten eines direkt kommunizierenden Kommunikationsnetzwerkes zur Verfügung gestellt wird, wobei eine zentrale Instanz nicht erforderlich ist und somit auch beim Ausfall einzelner Instanzen bzw. Clients (Kommunikationskomponenten) die bestehende Funktionalität aufrecht erhalten wird. Außerdem kann sich dann die ACD-Gruppe bzw. Arbeitsgruppe "spontan" ohne manuelle Administration bilden.

Die Lösung sieht weiter eine Kommunikationskomponente für ein direkt kommunizierendes Kommunikationsnetzwerk vor, mit einer Weiterleitungsfunktion zur Weiterleitung eines eingehenden Rufes zu einem einer Mehrzahl weiterer Kommunikationskomponenten, wobei die Kommunikationskomponente Speichermittel zur Speicherung eigener Eigenschaftsinformationen und von weiteren Eigenschaftsinformationen der weiteren Kommunikationskomponenten aufweist, mit einer Abrufeinrichtung zum Abruf der Eigenschaftsinformationen weiterer Kommunikationskomponenten versehen ist, eine Erfassungseinrichtung zur Erfassung zumindest einer dem eingehenden Ruf zugeordneten Rufnummer umfasst, eine Auswahleinrichtung zur Inbezugsetzung der Eigenschaftsinformation mit der zumindest einen Rufnummer aufweist, wobei die Auswahleinrichtung zur Auswahl der weiteren Kommunikationskomponenten unter Durchführung des vorstehend beschriebenen Verfahrens eingerichtet ist, und Übertragungsmittel zur Übertragung der eigenen Eigenschaftsinformationen zu den weiteren Kommunikationskomponenten umfasst. Eine solche Kommunikationskomponente kann in einem direkt kommunizierenden Kommunikationsnetzwerk sowohl weiterleitende Instanz sein, als auch das Weiterleitungsziel bilden. Eine solche Kommunikationskomponente ist in der Lage, die Eigenschaftsinformationen anderer Kommunikationskomponenten zu erfassen und für die Auswahl des Weiterleitungsziels zu berücksichtigen, und stellt überdies auch die eigenen Eigenschaftsinformationen den anderen Kommunikationskomponenten des gleichen Kommunikationsnetzwerks zur Verfügung. Durch den Einsatz solcher Kommunikationskomponenten können auch in direkt kommunizierenden Kommunikationsnetzwerken ohne eine zentrale Instanz die Funktionen eines ACD-Systems abgebildet werden.

Das erfindungsgemäße Verfahren ist durch die Merkmale der abhängigen Patentansprüche 2 bis 8 vorteilhaft weiter ausgestaltet. Die dabei beschriebenen Merkmale und Vorteile gelten dabei sinngemäß auch für die erfindungsgemäße Kommunikationskomponente.

Wenn die weiteren Clients die ihnen zugeordneten Eigenschaftsinformationen jeweils zum Abruf bereithalten und vor der Auswahl durch den ersten Client diese Eigenschaftsinformationen von den weiteren Clients abgerufen werden, entfällt die manuelle Administration der Eigenschaftsinformationen in jedem einen Ruf weiterleitenden Client. Dabei kann der Schritt des "Abrufens" entfallen, wenn die weiteren Clients die ihnen zugeordneten Eigenschaftsinformationen automatisch an den ersten Client übermitteln. Dabei liegen die Eigenschaftsinformationen immer in einer aktuellen Fassung in dem ersten Client vor, wenn die Eigenschaftsinformationen zeitgesteuert wiederholt und/oder bei einer Änderung der Eigenschaftsinformationen zu dem ersten Client übermittelt werden.

In dem Kommunikationsnetzwerk können auch Clients verwendet werden, die über keine eigene Möglichkeit zum Speichern und zum Übermitteln eigener Eigenschaftsinformationen verfügen. Dazu sind vorteilhaft in zumindest einem der weiteren Clients die zugeordneten Eigenschaftsinformationen mehrerer oder aller weiteren Clients zum Abruf verfügbar. Ein weiter Vorteil dieses Vorgehens ist, dass die Eigenschaftsinformationen mehrerer Clients gebündelt, also in einem einzigen Übertragungsschritt, übermittelt werden können.

Fehler bei der Weiterleitung von Rufen werden vermindert oder sogar vermieden, indem den Eigenschaftsinformationen zumindest teilweise eine maximale Gültigkeitsdauer zugeordnet ist, und solche Eigenschaftsinformationen, deren maximale Gültigkeitsdauer abgelaufen ist, nicht zur Auswahl heran gezogen und/oder erneut von dem diesen Eigenschaftsinformationen zugeordneten weiteren Client abgerufen werden. Das für die Auswahl notwendige "Wissen" liegt dabei im Kommunikationsnetzwerk auf den Clients verteilt vor, so dass eine zentrale Datenhaltung der Eigenschaftsinformationen nicht erforderlich ist.

Eine einfache und zugleich effektive Auswahl des Ziel-Clients ist möglich, wenn eine dem eingehenden Ruf zugeordnete Rufnummer als zugeordnete Rufeigenschaft verwendet wird.

Bei wiederholt eingehenden Rufen desselben Anrufers oder zu demselben Themengebiet wird eine erneute Weiterleitung an den gleichen Ziel-Client gewährleistet, indem bei der Weiterleitung die zumindest eine dem eingehenden Ruf zugeordnete Rufeigenschaft und Informationen über den ausgewählten Client (Ziel-Client) gespeichert werden und bei einem nachfolgenden weiteren eingehenden Ruf zumindest einer gleichen oder ähnlichen zugeordneten Rufeigenschaft anhand der gespeicherten Informationen dieser nachfolgende Ruf an denselben ausgewählten Client weitergeleitet wird.

Es genügt, wenn ein eingehender Ruf bei irgendeinem der verfügbaren Clients ankommt, wenn ein Client sowohl als erster Client als auch als einer der weiteren Clients verwendet wird. Dadurch wird überdies die Redundanz verbessert, weil bei Ausfall eines ersten Clients einer der weiteren Clients als erster Client verwendet werden kann.

Ausführungsbeispiele des erfindungsgemäßen Verfahrens werden nachfolgend anhand der Zeichnungen erläutert und dienen gleichzeitig als Ausführungsbeispiel für eine erfindungsgemäße Kommunikationskomponente.

Dabei zeigt:
- Figur 1: in schematischer Darstellung ein direkt kommunizierendes Kommunikationsnetzwerk mit Kommunikationskomponenten, wobei anhand von Pfeilen die zur Weiterleitung eines eingehenden Rufes versendeten Signalisierungen dargestellt sind,
- Figur 2: in schematischer Darstellung die Rufeigenschaften eines eingehenden Rufes, und
- Figur 3: in schematischer Darstellung die Eigenschaftsinformationen eines Clients (Kommunikationskomponente).

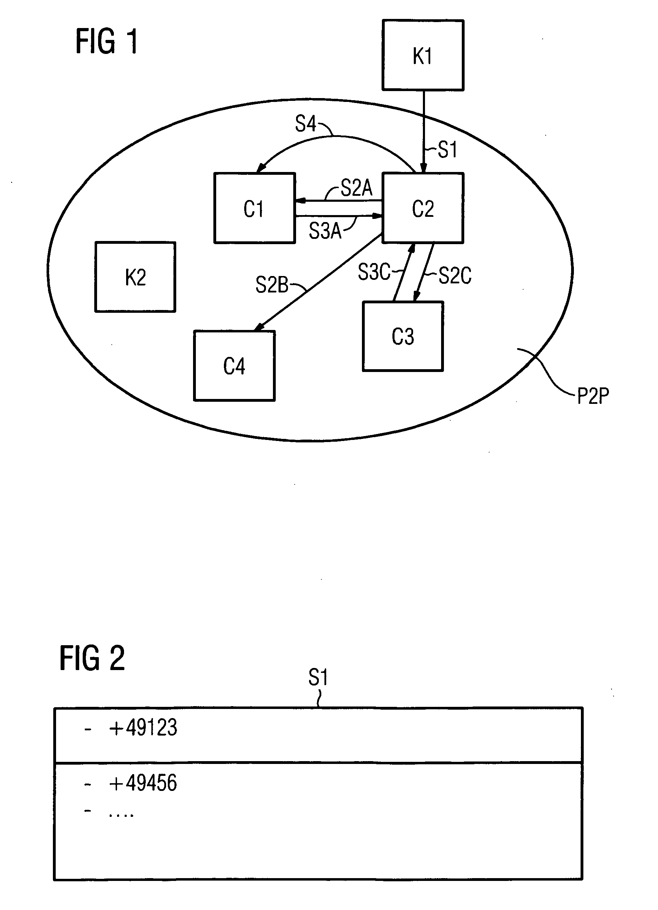

In der Figur 1 ist schematisch ein direkt kommunizierendes Kommunikationsnetzwerk P2P ("Peer-to-Peer") gezeigt, in welchem die Clients C1, C2, C3, C4 angeordnet sind. Die Clients C1, C2, C3, C4 werden durch Kommunikationskomponenten (IP-Telefon, Multimedia-PC, PDA, WLAN-Endgerät, Smart-Phone o.ä.) gebildet, wobei der Client C1 eine Kommunikationskomponente mit einer Voice-Mail-Server-Funktionalität (Anrufbeantworter-Funktion) ist, die Clients C2, C3 Multimedia-PCs (Computer mit Telephonie-Funktion) und der Client C4 ein IP-Phone (VoIP-Telefon) ist. Die Clients C2, C3, C4 sind dabei den Mitarbeitern eines Call-Centers zugeordnet, die unterschiedlichen Zuständigkeiten zugeordnet sind und die Anrufe externer Kunden bearbeiten sollen. Eine weitere Kommunikationskomponente K2, die ebenfalls in dem Kommunikationsnetzwerk P2P angeordnet ist, ist nicht Bestandteil der Arbeitsgruppe. Die Kommunikationskomponente K1 ist in der Figur 1 stellvertretend für eine nicht begrenzte Anzahl externer Kommunikationskomponenten dargestellt und steht in diesem Ausführungsbeispiel für das Kommunikationsendgerät eines Kunden, der die von den Clients C1, C2, C3, C4 gebildete Hotline anruft. Die in der Figur 1 dargestellten Pfeile symbolisieren Signalisierungsmeldungen S1, S2A, S2B, S2C, S3A, S3B, S3C, S4, welche zur Vermittlung eines Rufes zwischen den Kommunikationskomponenten bzw. den von diesen gebildeten Clients ausgetauscht werden.

Im Folgenden wird anhand der Figur 1 die Weiterleitung eines Rufes gezeigt, der von der Kommunikationskomponente K1 den Client C2 in dem direkt kommunizierenden Kommunikationsnetzwerk P2P erreicht. Um die Arbeitsgruppe, welche die "Hotline" bildet, zu erreichen, versendet die Kommunikationskomponente K1 eine Signalisierungsmeldung S1 an ein Gateway, welches das Kommunikationsnetzwerk P2P mit einem (hier nicht dargestellten) öffentlichen Kommunikationsnetzwerk verbindet. In dem Kommunikationsnetzwerk P2P wird diese Gateway-Funktion durch den Client C2 ("Gateway-Peer") ausgeübt. Auch die übrigen Clients C1, C3, C4 können dabei eine solche Gateway-Funktionalität besitzen und damit ebenso Rufe aus einem externen Kommunikationsnetzwerk empfangen.

Die Signalisierungsmeldung S1 wird durch den Client C2 ausgewertet, wobei festgestellt wird, dass die Ziel-Kommunikationsadresse, also die gewählte Rufnummer, nicht einen konkret genannten Client des Kommunikationsnetzwerks P2P identifiziert, sondern die "Hotline-Nummer" der Arbeitsgruppe ist. Weiter geht aus der Signalisierungsmeldung S1 die "Absender-Rufnummer", also die Absender-Kommunikationsadresse des Kommunikationsendgerätes K1, hervor. Diese Informationen, die hier als Rufeigenschaften bezeichnet werden, werden von einer Erfassungseinrichtung des Clients C2 aus der Signalisierungsmeldung S1 extrahiert, zwischengespeichert und einer Auswahleinrichtung des Clients C2 zugeführt, welche für eine Weiterleitungsfunktion das endgültige Rufziel, also den bestimmungsgemäßen Client, auswählen soll.

Die mit der Signalisierungsmeldung S1 übertragenen Rufeigenschaften sind in der Figur 2 schematisch dargestellt. Dabei ist die Rufnummer +49123 in einem ersten Datenfeld und die Zielrufnummer +49456 der "Hotline" in einem weiteren Datenfeld angegeben. Vorteilhaft sind in einer solchen Signalisierungsmeldung S1 auch bereits Schlagworte über sachliche Inhalte, die mit dem Ruf verbunden sind, hinterlegt. Das setzt natürlich voraus, dass die Kommunikationskomponente K1 solche Schlagworte auch handhaben (z.B. mit einer Eingabemöglichkeit) und versenden kann. Auch solche sachlichen Informationen über Inhalte (sog. Meta-Information) werden dann durch den Client C2 bzw. dessen Auswahleinrichtung für die Auswahl eines Rufziels herangezogen. Alternativ oder ergänzend hierzu kann der Ruf durch den Client C2 auch zunächst angenommen werden, wobei von dem Anrufer z.B. über eine synthetische Sprachausgabe in einem interaktiven Dialog entsprechende Informationen abgefragt werden. Technische Einrichtungen hierfür werden in der Literatur oft als "Interactive-Voice-Response"-Systeme bezeichnet.

Im vorliegenden Ausführungsbeispiel wird zur Vereinfachung angenommen, dass allein die Absender-Rufnummer +49123 der Kommunikationskomponente K1 als Rufeigenschaft zur Entscheidung über das Rufziel herangezogen wird. In vielen Fällen ist jedoch die Entscheidung anhand von Sachgebieten (Fähigkeiten, "Skills") vorteilhafter.

Die Auswahleinrichtung des Clients C2 überprüft nun in einem Verlaufsspeicher, in dem Informationen über vorangegangene Vermittlungsvorgänge gespeichert sind, ob in der Vergangenheit (hier: innerhalb der letzten zwei Wochen) schon einmal ein Ruf mit der Absender-Rufnummer +49123 zu einem der Clients C2, C3, C4 vermittelt wurde. Dies ist nicht der Fall; anderenfalls wäre das bevorzugte Vermittlungsziel (Weiterleitungsziel) für diesen Ruf die entsprechende, bereits einmal ausgewählte Kommunikationskomponente (Client).

In einem nächsten Schritt überprüft die Auswahleinrichtung, ob in einem Speicher des Clients C2 Eigenschaftsinformationen über einen der Clients C2, C3, C4 vorliegen, die mit den erfassten Rufeigenschaften korrelieren. Da auch dies nicht der Fall ist, versendet der Client C2 Abfragenachrichten S2A, S2B, S2C an die Clients C1, C3, C4. Die Abfragenachrichten S2A, S2B, S2C können, wie im vorliegendem Ausführungsbeispiel, einzeln an die Clients C1, C3, C3, deren Kommunikationsadressen dem Client C2 bekannt sind, versendet werden. Alternativ ist auch das Versenden einer "Broadcast-Meldung" als Abfragenachricht möglich, welche in diesem Fall alle Clients bzw. Kommunikationskomponenten des Kommunikationsnetzwerks P2P erreichen würde.

Die Abfragenachrichten S2A, S2B, S2C umfassen als Suchbegriff die Rufnummer +49123 der Kommunikationskomponente K1, also eine Rufeigenschaft des weiterzuleitenden Rufes. Die Clients C1, C3 beantworten die Abfragenachricht mit Antwortnachrichten S3A, S3C, die Datensätze mit Eigenschaftsinformationen ("Selbstauskunft") umfassen. Aus der Antwortnachricht S3A geht hervor, dass die Kommunikationskomponente mit dem Client C1 eine Voice-Mail-Funktion zur Verfügung stellt für solche Rufe, die nicht oder noch nicht von einem der Clients C2, C3, C4 angenommen werden können. Der Client C4, der von einem einfachen IP-Telefon gebildet wird, ist nicht in der Lage, eine Antwortnachricht auf die Abfragenachricht S2B zu generieren. Der Client C3 antwortet mit der Antwortnachricht S3C, welche zwei Datensätze umfasst. Der erste Datensatz EI4 ("Eigenschaftsinformation 4") - hier nicht dargestellt - umfasst Eigenschaftsinformationen des Clients C4. Ein solches Endgerät, welches durch einen Stellvertreter ("Proxy") repräsentiert wird, wird hierbei auch als "virtueller Peer" bezeichnet.

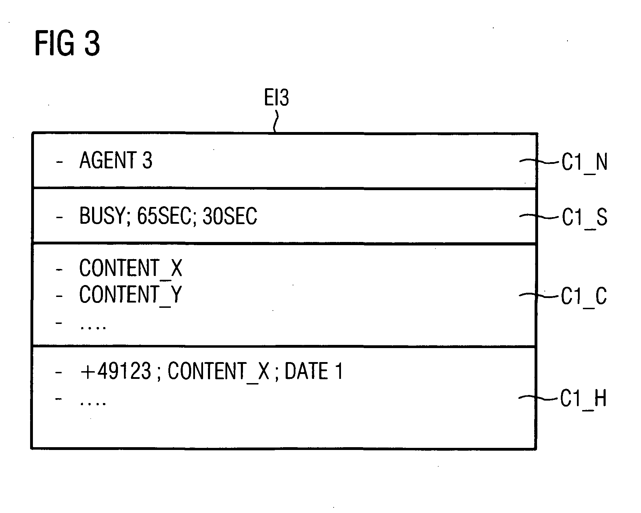

Ein weiterer Datensatz EI3, dieser ist in der Figur 3 schematisch dargestellt, umfasst die Eigenschaftsinformationen des Clients C3. Dabei ist in dem Datenfeld C1_N der Name "Agent 3" des Clients 3 hinterlegt. In dem Datenfeld C1_S ist der Status "BUSY; 65SEC; 30SEC" (Client C3 ist also seit 65 Sekunden besetzt; diese Information hat eine max. Gültigkeit von 30 Sekunden) verzeichnet. Während also der Status eine vergleichsweise "kurzlebige" Information darstellt und daher eine geringe Gültigkeit aufweist, haben die restlichen Informationen eine längere oder gar - wie in diesem Beispiel - unbegrenzte "Lebensdauer".

Das Datenfeld C1_C umfasst Informationen über die Fachgebiete CONTENT_X, CONTENT_Y des Sachbearbeiters, welcher das Gerät Client C3 benutzt. Schließlich enthält das Datenfeld C1_H eine Liste mit den letzten "Kundenkontakten" des Clients C3, wobei jedem dieser Einträge die Rufnummer (Absender-Rufnummer), das Themengebiet und die Datums-/Uhrzeitinformationen des Kontaktes zugeordnet sind. Die mit den Antwortnachrichten S3A, S3C empfangenen Eigenschaftsinformationen der Clients C1, C3, C4 werden von dem Client C2 ebenso wie die eigenen Eigenschaftsinformationen - Client C2 ist nicht nur "Gateway-Peer", sondern auch Arbeitsplatz eines Mitarbeiters mit ebenso zugeordneten Eigenschaftsinformationen - gespeichert. Die gespeicherten Informationen können dabei auch für weitere, zukünftige Weiterleitungen ausgewertet werden, sofern die den (Teil-)Eigenschaftsinformationen zugeordneten max. Gültigkeiten nicht abgelaufen sind. Ebenso können die so gewonnenen Eigenschaftsinformationen auch anderen Clients zur Verfügung gestellt werden.

Die so gewonnenen Eigenschaftsinformationen werden nun von der Auswahleinrichtung mit den der Signalisierungsmeldung S1 entnommenen Rufeigenschaften in Bezug gesetzt. Dabei wird entschieden, dass Client C3 aufgrund des vergangenen Kontaktes zu dem gleichen Kunden (Eintrag aus Datenfeld C1_H) das am besten geeignete Weiterleitungsziel für den eingehenden Ruf darstellt, aber aufgrund seines Status "BUSY" den Ruf (noch) nicht annehmen kann. Deswegen wird der Ruf durch die Weiterleitungsfunktion des Clients C2 mittels der Signalisierungsmeldung S4 an den Client C1 (Voice-Mail-Server) weitergeleitet, wobei die Signalisierungsmeldung S4 für den Voice-Mail-Server des Clients C1 den Auftrag umfasst, dem zugeordneten Ruf eine Wartemusik vorzuspielen und nach einer festgelegten Wartezeit (hier: 30 Sekunden; dies entspricht der Gültigskeitsdauer der Statusinformation in den Eigenschaftsinformationen EI3) den Ruf für einen erneuten Vermittlungsversuch zu dem Client C2 zurückzustellen. Dabei werden zwischenzeitlich "abgelaufene" Eigenschaftsinformationen (hier: Status) durch den Client C2 automatisch erneut angefordert. Alternativ kann der Client C3 auch so eingestellt sein, dass Statusänderungen automatisch an den Client C2, dem ja bereits mit der Signalisierungsmeldung S3C Eigenschaftsinformationen übermittelt wurden, gemeldet werden. Die Eigenschaftsinformationen können auch die Information darüber enthalten, ob der jeweilige Client (derzeit) ein Teil der (bzw. einer bestimmten) ACD-Gruppe (Hotline) ist bzw. sein soll. Das ist besonders vorteilhaft, wenn die Abfragenachricht als Broadcast- oder Multicastmeldung versendet wird. Dann kann sich die ACD-Gruppe "spontan" ohne manuelle Administration bilden.

Die vorstehende Konfiguration kann durch eine beliebige Anzahl Clients erweitert werden. Damit ist auch die Anzahl der Clients mit einer Weiterleitungsfunktion, also z.B. Gateway-Peers mit einer ACD-Funktion, nicht beschränkt. Dabei ist wesentlich, dass die Ressourcen, also sowohl Informationen (hier: die Eigenschaftsinformationen) als auch die vermittelnden Instanzen, nicht konzentriert oder beschränkt sind auf einzelne Komponenten (Geräte, Clients, Server, Gateway), sondern "verteilt" in dem Netzwerk zur Verfügung stehen und aufgefunden werden können, was eine gleichmäßige Lastverteilung und eine hohe Ausfallsicherheit (Redundanz) ermöglicht. Dabei kann prinzipiell jede Kommunikationskomponente sowohl Client- als auch Server-Funktionalitäten aufweisen; man spricht daher auch von "Servants".

## Patentansprüche

1. Verfahren zur Weiterleitung eines bei einem ersten Client (C2) eingehenden Rufes an einen zweiten einer Mehrzahl weiterer Clients (C1, C2, C3, C4) in einem direktkommunizierenden Kommunikationsnetzwerk (P2P), wobei
- der zweite Client (Cl) aus der Mehrzahl weiterer Clients (C1, C2, C3, C4) ausgewählt wird,
- die Auswahl durch den ersten Client (C2) erfolgt,
- die Auswahl anhand von den weiteren Clients (C1, C2, C3, C4) jeweils zugeordneten und im ersten Client (C2) verfügbaren Eigenschaftsinformationen (EI3) erfolgt,
- die Eigenschaftsinformationen (EI3) durch Versenden einer Abfragenachricht (S2A, S2B, S2C) mit zumindest einem Suchbegriff vcn dem ersten Client (C2) zu zumindest einem der weiteren Clients (C1, C2, C3, C4) abgefragt werden,
- zur Auswahl zumindest eine dem eingehenden Ruf zugeordnete Rufnummer ausgewertet wird, wobei der Suchbegriff mit den Eigenschaftsinformationen (EI3) in Beziehung gesetzt wird, und
- der Ruf an den ausgewählten der weiteren Clients (C1) weihergeleitet wird,
**dadurch gekennzeichnet, dass**
- der Suchbegriff die Rufnummer einer Arbeitsgruppe ist,
- die Abfragenachricht (S2A, S2B, S2C) als Broadcast- oder Multicastmeldung versendet wird und
- die Eigenschaftsinformationen (EI3) Informationen darüber enthalten, ob der jeweilige Client derzeit Teil der Arbeitsgruppe ist.

2. Verfahren nach Patentanspruch 1,
**dadurch gekennzeichnet, dass**
die weiteren Clients (C1, C2, C3, C4) die ihnen zugeordneten Eigenschaftsinformationen (EI3) jeweils zum Abruf bereithalten, und
vor der Auswahl durch den ersten Client (C2) diese Eigenschaftsinformationen (EI3) von den weiteren Clients abgerufen werden.

3. Verfahren nach Patentanspruch 1 oder 2,
**dadurch gekennzeichnet, dass**
die weiteren Clients (C1, C2, C3, C4) die ihnen zugeordneten Eigenschaftsinformationen (EI3) automatisch zu dem ersten Client (C2) übermitteln.

4. Verfahren nach Patentanspruch 2 oder 3,
**dadurch gekennzeichnet, dass**
die Eigenschaftsinformationen (EI3) zeitgesteuert wiederholt und/oder bei einer Änderung der Eigenschaftsinformationen (EI3) zu dem ersten Client (C2) übermittelt werden.

5. Verfahren nach einem der vorhergehenden Patentansprüche,
**dadurch gekennzeichnet, dass**
in zumindest einem der weiteren Clients (C1, C2, C3, C4) die zugeordneten Eigenschaftsinformationen (EI3) mehrerer oder aller weiteren Clients (C1, C2, C3, C4) zum Abruf verfügbar sind.

6. Verfahren nach einem der vorhergehenden Patentansprüche,
**dadurch gekennzeichnet, dass**
den Eigenschaftsinformationen (EI3) zumindest teilweise eine maximale Gültigkeitsdauer zugeordnet ist, und
solche Eigenschaftsinformationen (EI3), deren maximale Gültigkeitsdauer abgelaufen ist, nicht zur Auswahl herangezogen und/oder erneut von dem diesen Eigenschaftsinformationen (EI3) zugeordneten weiteren Client (C1, C2, C3, C4) abgerufen werden.

7. Verfahren nach einem der Patentansprüche 5 oder 6,
**dadurch gekennzeichnet, dass**
bei der Weiterleitung die zumindest eine dem eingehenden Ruf zugeordnete Rufeigenschaft und Informationen über den ausgewählten Client (C1, C2, C3, C4) gespeichert werden, und
bei einem nachfolgenden weiteren eingehenden Ruf mit zumindest einer gleichen oder ähnlichen zugeordneten Rufeigenschaft anhand der gespeicherten Informationen dieser nachfolgende Ruf an denselben ausgewählten Client (C1, C2, C3, C4) weitergeleitet wird.

8. Verfahren nach einem der vorhergehenden Patentansprüche,
**dadurch gekennzeichnet, dass**
ein Client (C1, C2, C3, C4) sowohl als erster Client (C2) als auch als einer der weiteren Clients (C1, C2, C3, C4) verwendet wird.

9. Kommunikationskomponente (C2) für ein direktkommunizierendes Kommunikationsnetzwerk (P2P),
mit einer Weiterleitungsfunktion zur Weiterleitung eines eingehenden Rufes zu einer aus einer Mehrzahl weiterer Kommunikationskomponenten (C1, C2, C3, C4),
**dadurch gekennzeichnet, dass**
die Kommunikationskomponente (C2)
• Speichermittel zur Speicherung eigener Eigenschaftsinformationen und von weiteren Eigenschaftsinformationen (EI3) der weiteren Kommunikationskomponenten (C1, C2, C3, C4) aufweist,
• mit einer Abrufeinrichtung zum Abruf der Eigenschaftsinformationen (EI3) weiterer Kommunikationskomponenten (C1, C2, C3, C4) versehen ist,
• eine Erfassungseinrichtung zur Erfassung zumindest einer dem eingehenden Ruf zugeordneten Rufnummer umfasst,
• eine Auswahleinrichtung zur Inbezugsetzung der Eigenschaftsinformationen (EI3) mit der zumindest einen Rufnummer aufweist, wobei
die Auswahleinrichtung zur Auswahl der weiteren Kommunikationskomponente (C1, C2, C3, C4) unter Durchführung des Verfahrens gemäß einem der Ansprüche 1 bis 8 eingerichtet ist, und
• Übertragungsmittel zur Übertragung der eigenen Eigenschaftsinformationen zu den weiteren Kommunikationskomponenten (C1, C2, C3, C4) umfasst.

## Claims

1. Method for forwarding an incoming call at a first client (C2) to a second of a plurality of additional clients (C1, C2, C3, C4) in a directly communicating communication network (P2P), wherein
- the second client (C1) is selected from the plurality of additional clients (C1, C2, C3, C4),
- the selection is made by the first client (C2),
- the selection occurs on the basis of attribute information (EI3) associated with the respective additional clients (C1, C2, C3, C4) and available in the first client (C2),
- the attribute information (EI3) is queried by sending a query message (S2A, S2B, S2C) with at least one search term from the first client (C2) to at least one of the additional clients (C1, C2, C3, C4),
- for the selection of at least one call number associated with the incoming call, wherein the search term is correlated with the attribute information (EI3), and
- the call is forwarded to the client selected from the additional clients (C1), **characterized in that**
- the search term is the call number of a work group,
- the query message (S2A, S2B, S2C) is sent as a broadcast or multicast message, and
- the attribute information (EI3) contains information on whether the respective client is at present part of the work group.

2. Method according to Claim 1,
**characterized in that**
the additional clients (C1, C2, C3, C4) keep the attribute information (EI3) associated with them in each case available for retrieval, and **in that**,
before the selection by the first client (C2), this attribute information (EI3) is retrieved by the additional clients.

3. Method according to Claim 1 or 2,
**characterized in that**
the additional clients (C1, C2, C3, C4) automatically transmit the attribute information (EI3) associated with them to the first client (C2).

4. Method according to Claim 2 or 3,
**characterized in that**
the attribute information (EI3) is repeated in a time-controlled manner and/or in the case of a change in the attribute information (EI3) is transmitted to the first client (C2).

5. Method according to any one of the preceding claims,
**characterized in that**,
in at least of the additional clients (C1, C2, C3, C4), the associated attribute information (EI3) of several or of all of the additional clients (C1, C2, C3, C4) is available for retrieval.

6. Method according to any one of the preceding claims,
**characterized in that**
the attribute information (EI3) is associated at least partially with a maximum validity duration, and
such attribute information (EI3) whose maximum validity duration has expired is not used for the selection and/or retrieved again by the additional client (C1, C2, C3, C4) associated with this attribute information (EI3).

7. Method according to Claim 5 or 6,
**characterized in that**,
in the case of forwarding, the at least one call attribute associated with the incoming call and information on the selected client (C1, C2, C3, C4) are stored, and, in the case of a subsequent additional incoming call having at least an identical or similar associated call attribute, said additional call is forwarded on the basis of the stored information to the same selected client (C1, C2, C3, C4).

8. Method according to any one of the preceding claims,
**characterized in that**
a client (C1, C2, C3, C4) is used both as first client (C2) and also as one of the additional clients (C1, C2, C3, C4).

9. Communication component (C2) for a directly communicating communication network (P2P),
with a forwarding function for forwarding an incoming call to one of a plurality of additional communication components (C1, C2, C3, C4),
**characterized in that**
the communication component (C2)
• comprises storage means for storing inherent attribute information and additional attribute information (EI3) of the additional communication components (C1, C2, C3, C4),
• is provided with a retrieval device for the retrieval of the attribute information (EI3) of additional communications components (C1, C2, C3, C4)
• comprises an acquisition device for acquiring at least one call number associated with the incoming call,
• comprises a selection device for correlating the attribute information (EI3) with the at least one call number, wherein
the selection device is set up for the selection of the additional communication components (C1, C2, C3, C4) with performance of the method according to one of Claims 1 to 8, and
• comprises transmission means for transmitting the inherent attribute information to the additional communication components (C1, C2, C3, C4).

## Revendications

1. Procédé pour transférer un appel entrant chez un premier client (C2) vers un second d'une pluralité de clients supplémentaires (C1, C2, C3, C4) dans un réseau de communication en communication directe (P2P), dans lequel
- le second client (C1) est sélectionné parmi la pluralité de clients supplémentaires (C1, C2, C3, C4),
- la sélection est réalisée par le premier client (C2),
- la sélection se produit sur la base d'informations d'attribut (EI3) associées aux clients supplémentaires (C1, C2, C3, C4) respectifs et disponibles chez le premier client (C2),
- les informations d'attribut (EI3) sont interrogées en envoyant un message d'interrogation (S2A, S2B, S2C) avec au moins un terme de recherche du premier client (C2) vers au moins un des clients supplémentaires (C1, C2, C3, C4),
- pour la sélection d'au moins un numéro d'appel associé à l'appel entrant, le terme de recherche étant en corrélation avec les informations d'attribut (EI3), et
- l'appel est transféré au client sélectionné parmi les clients supplémentaires (C1), **caractérisé en ce que**
- le terme de recherche est le numéro d'appel d'un groupe de travail,
- le message d'interrogation (S2A, S2B, S2C) est envoyé comme un message à diffusion générale ou sélective, et
- les informations d'attribut (EI3) contiennent des informations indiquant si le client respectif fait actuellement partie du groupe de travail.

2. Procédé selon la revendication 1,
**caractérisé en ce que**
les clients supplémentaires (C1, C2, C3, C4) maintiennent les informations d'attribut (EI3) qui leur sont associées dans tous les cas à disponibilité aux fins de récupération, et **en ce que**,
avant la sélection par le premier client (C2), ces informations d'attribut EI3) sont récupérées par les clients supplémentaires.

3. Procédé selon la revendication 1 ou 2,
**caractérisé en ce que**
les clients supplémentaires (C1, C2, C3, C4) transmettent automatiquement les informations d'attribut (EI3) qui leur sont associées au premier client (C2).

4. Procédé selon la revendication 2 ou 3,
**caractérisé en ce que**
les informations d'attribut (EI3) sont répétées d'une manière contrôlée dans le temps et/ou au cas où un changement des informations d'attribut (EI3) est transmis au premier client (C2).

5. Procédé selon l'une quelconque des revendications précédentes,
**caractérisé en ce que**
chez au moins les clients supplémentaires (C1, C2, C3, C4), les informations d'attribut (EI3) associées de plusieurs ou de l'ensemble des clients supplémentaires (C1, C2, C3, C4) sont disponibles aux fins de récupération,

6. Procédé selon l'une quelconque des revendications précédentes,
**caractérisé en ce que**
les informations d'attribut (EI3) sont associées au moins en partie avec une durée de validité maximale, et
de telles informations d'attribut (EI3) dont la durée de validité maximale a expiré ne sont pas utilisées pour la sélection et/ou récupérées à nouveau par le client supplémentaire (C1, C2, C3, C4) associé à ces informations d'attribut (EI3).

7. Procédé selon la revendication 5 ou 6,
**caractérisé en ce que**
en cas de transfert, l'au moins un attribut d'appel associé à l'appel entrant et les informations sur le client sélectionné (C1, C2, C3, C4) sont stockés et, dans le cas d'un appel entrant supplémentaire ultérieur ayant au moins un attribut d'appel associé identique ou similaire, ledit appel supplémentaire est transféré sur la base des informations stockées vers le même client sélectionné (C1, C2, C3, C4).

8. Procédé selon l'une quelconque des revendications précédentes,
**caractérisé en ce que**
un client (C1, C2, C3, C4) est utilisé à la fois comme premier client (C2) et également comme un des clients supplémentaires (C1, C2, C3, C4).

9. Composant de communication (C2) pour un réseau de communication en communication directe (P2P),
avec une fonction de transfert d'un appel entrant vers l'un d'une pluralité de composants de communication supplémentaires (C1, C2, C3, C4),
**caractérisé en ce que**
le composant de communication (C2)
• comprend des moyens de stockage pour stocker des informations d'attribut inhérentes et des informations d'attribut supplémentaires (EI3) des composants de communication supplémentaires (C1, C2, C3, C4),
• est doté d'un dispositif de récupération pour la récupération des informations d'attribut (EI3) des composants de communication supplémentaires (C1, C2, C3, C4)
• comprend un dispositif d'acquisition pour acquérir au moins un numéro d'appel associé à l'appel entrant,
• comprend un dispositif de sélection pour mettre en corrélation les informations d'attribut (EI3) avec l'au moins un numéro d'appel, dans lequel
le dispositif de sélection est configuré pour la sélection des composants de communication supplémentaires (C1, C2, C3, C4) avec la mise en oeuvre du procédé selon l'une des revendications 1 à 8, et
• comprend des moyens de transmission pour transmettre les informations d'attribut inhérentes vers les composants de communication supplémentaires (C1, C2, C3, C4),
